# EUROPÄISCHE PATENTSCHRIFT

(11) **EP 1 034 102 B1**
(45) Veröffentlichungstag und Bekanntmachung des Hinweises auf die Patenterteilung: **06.04.2005**
(21) Anmeldenummer: 99939355.6
(22) Anmeldetag: 17.06.1999
(51) Int. Cl.: B60S 1/04

(54) **VERFAHREN ZUR HERSTELLUNG EINER ROHRPLATINE**
PROCESS FOR MANUFACTURING A TUBULAR CARRIER
PROCEDE DE FABRICATION POUR UNE PLATINE TUBULAIRE

(30) Priorität: 01.07.1998 DE 19829320
(43) Veröffentlichungstag der Anmeldung: 13.09.2000
(73) Patentinhaber: ROBERT BOSCH GMBH, 70442 Stuttgart (DE)
(72) Erfinder: MÜHLPFORTE, Kurt, D-77815 Bühl (DE); HANSEN, Olaf, D-99817 Eisenach (DE); BECKER, Henk, D-76815 Bühl (DE); BOOS, Tino, D-76532 Baden-Baden (DE); BISCHOF, Rolf, D-99891 Fischbach (DE)
(86) Internationale Anmeldenummer: PCT/DE1999/001776
(87) Internationale Veröffentlichungsnummer: WO 2000/001563

(56) Entgegenhaltungen:
- EP-A- 0 798 183
- DE-A- 3 919 837
- FR-A- 2 721 883
- US-A- 3 793 671

## Beschreibung

### Stand der Technik

Die Erfindung geht aus von einer Rohrplatine nach dem Oberbegriff des Anspruchs 1.

Wischeranlagen für Kraftfahrzeuge werden mit einem Wischerträger, einer sogenannten Platine bzw. Rohrplatine - wenn der Wischerträger auch aus Rohren besteht -, an der Karosserie eines Kraftfahrzeugs befestigt. Die Platine umfaßt eine Motorplatine, die einen Wischerantrieb mit einem Wischermotor und einem daran angebauten Getriebe trägt. Eine Abtriebswelle des Getriebes ist in einem Getriebedom gelagert und treibt in der Regel über eine Kurbel und Gelenkstangen Kurbeln an, die mit einer Antriebswelle für jeden Scheibenwischer fest verbunden sind. Das Getriebegehäuse ist in der Regel mit drei Schrauben an der Motorplatine angeschraubt, die von einem Platinenrohr gehalten wird. Die Schrauben, die um den Getriebedom verteilt angeordnet und durch Schraubenlöcher der Motorplatine gesteckt sind, greifen in vorstehende Schraubenstutzen eines abtriebsseitigen Gehäusedeckels ein. Die Schraubenstutzen stützen das Getriebegehäuse an der Motorplatine ab.

Antriebswellen der Scheibenwischer sind in Wischerlaaern gelagert, deren Lagergehäuse an den Enden der Platine befestigt oder angeformt sind. Die Platine ist unmittelbar über die Lagergehäuse oder über Befestigungsaugen, die am Lagergehäuse, an der Platine und/oder der Motorplatine angeformt sind, an einer Fahrzeugkarosserie befestigt. In der Regel werden die Platinen aus vielen Bauteilen zusammengesetzt. Dies führt zu zahlreichen Schnittstellen mit entsprechenden Toleranzen.

Aus der DE-GM 74 34 119 ist eine Rohrplatine bekannt, die aus einem Vierkantrohr hergestellt ist, an das eine als Motorplatine dienende Platte angeschweißt ist. An den Enden des Vierkantrohrs ist jeweils ein Wischerlager fixiert. Derartige Rohrplatinen oder Rohrrahmenanlagen sind trotz einer leichten Bauweise sehr stabil. Aus Kostengründen wird ein gerades Trägerrohr angestrebt, das keinen Vorbiegearbeitsgang erfordert.

Es ist ferner aus der EP 04 09 944 B1 eine Rohrplatine bekannt, bei der eine Motorplatine rohrförmige Teile über formschlüssige Anschlüsse verbindet. Eine Variante zeigt, daß die Motorplatine mit einem Gehäusedeckel des Getriebegehäuses einstückig ausgebildet sein kann. Zur Dämpfung der Schwingungen ist der rohrförmige Träger zweigeteilt und die Teile sind über ein geräuschdämpfendes Element aus Kunststoff verbunden. Nach einer Varianten ist der rohrförmige Träger abschnittsweise mit einem geräuschdämpfenden Material ausgefüllt.

Es ist ferner aus der EP 0 689 975 A1 eine Rohrplatine mit einer Motorplatine bekannt. Diese besteht aus zwei spiegelbildlich gestalteten Teilen, die an der Seite zu einem Platinenrohr hin Vertiefungen aufweisen, in die das Platinenrohr eingebettet ist. Die Vertiefungen umgeben das Platinenrohr jeweils in einem Umfangsbereich von ca. 180°, so daß beide Vertiefungen zusammen das Platinenrohr auf dem gesamten Umfang umgeben. Bei der Montage werden beide Teile der Motorplatine um das Platinenrohr gelegt und miteinander verbunden, z.B. mechanisch oder durch Kleben oder durch eine thermische Verbindung. Dabei wird das Platinenrohr zur Motorplatine in Umfangsrichtung und in axialer Richtung formschlüssig und/oder durch Kleben stoffschlüssig fixiert. Die zwei Teile der Motorplatine können aus Kunststoff oder Metall hergestellt und gemäß einer Ausgestaltung auch zu einem Stück vereinigt sein.

Aus der FR-A-2 721 883 ist eine Scheibenwischeranlage bekannt, die einen einstückig aus Kunststoff hergestellten Träger aufweist.

Es ist aus Erhard, Günter "Konstruieren mit Kunststoffen", Hansa Verlag, 1993, ISBN Nr. 3/446/17397/8 ein Verfahren zum Umformen von Halbzeugen aus thermoplastischen Kunststoffen zu Werkstücken mit Hohlprofilen bekannt. Bei diesem Verfahren, wird Gas, z.B. Stickstoff, unter hohem Druck gezielt in eine geteilte Werkzeugform eingeblasen, in der sich das erhitzte Halbzeug aus Kunststoff oder eine Kunststoffschmelze befindet. Der hohe Gasdruck drückt den Kunststoff an die Innenkontur der Werkzeugform, der nach dem Abkühlen die aufgeprägte Form beibehält. So lassen sich komplexe Formen gestalten. Das gezielte Einblasen kann im Angußbereich oder an anderen Stellen der Werkzeugform erfolgen.

Aus der DE-A-39 19 837 ist eine Rohrplatine für eine Scheibenwischeranlage nach dem Oberbegriff des Anspruchs 1 bekannt.

### Vorteile der Erfindung

Nach der Erfindung sind das Platinenrohr, die Motorplatine und die Lagergehäuse einstückig hergestellt. Dadurch verringert sich die Anzahl der Bauteile und Schnittstellen. Ferner ergeben sich kleinere Toleranzen, da sich die Abmessungen der Rohrplatine nicht durch das Zusammenfügen mehrerer Bauteile ergeben, sondern durch werkzeugabhängige Konturen bestimmt sind.

Die Rohrplatine kann gemäß dem erfindungsgemäßen Verfahren leicht hergestellt werden, indem das Platinenrohr in einer Werkzeugform nach dem Gasinnendruckverfahren ausaeformt und die Lagergehäuse, die Motorplatine und die Stützpunkte in der gleichen Werkzeugform in einem Spritzgußverfahren hergestellt werden. Durch die Kombination der beiden Verfahrenstechniken ist es möglich, in einem Arbeitsgang Hohlkörper mit einem geringen Gewicht und ausreichender Stabilität herzustellen und nahtlos mit Teilen aus vollem Material zu verbinden. Dabei kann weitgehend auf eine Nachbearbeitung verzichtet werden.

Das Herstellungsverfahren läßt eine Vielfalt von Gestaltungsmöglichkeiten zu, so daß ohne großen Aufwand Kundenwünsche bezüglich der Rohrform und der Befestigungspunkte an der Karosserie berücksichtigt werden können. So können die Lagergehäuse unmittelbar Lagerflächen für die Wischerlager besitzen oder es können im gleichen Arbeitsgang Lagerbuchsen in die Lagergehäuse eingespritzt werden. Außerdem können Befestigungspunkte in beliebiger Form an die Lagergehäuse, das Platinenrohr und/oder die Motorplatine einstückig angespritzt werden. Schließlich ist es möglich, das Platinenrohr in Längsrichtung entsprechend den Erfordernissen bezüglich Festigkeit, Schwingungsverhalten und Formsteifigkeit im Querschnitt unterschiedlich zu gestalten, und zwar sowohl was den Durchmesser und die äußere Kontur angeht als auch was die Wandstärke betrifft. Es können z.B. zylindrische, konische oder quaderförmige Hohlprofile mit einer kreisförmigen, ovalen oder polygonen Kontur hergestellt werden. Zeichnung

Weitere Vorteile ergeben sich aus der folgenden Zeichnungsbeschreihuna. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine perspektivische Ansicht einer erfindungsgemäßen Rohrplatine,
- Fig. 2: einen Schnitt durch eine schematische Werkzeugform zu Beginn eines Innenhochdruckverfahrens,
- Fig. 3: einen Schnitt entsprechend Fig. 2 beim Aufbau des Innendrucks.
- Fig. 4 bis 6: Varianten von Querschnitten eines Platinenrohrs und
- Fig. 7: einen Längsschnitt durch einen gewellten Bereich eines Platinenrohrs.

### Beschreibung der Ausführungsbeispiele

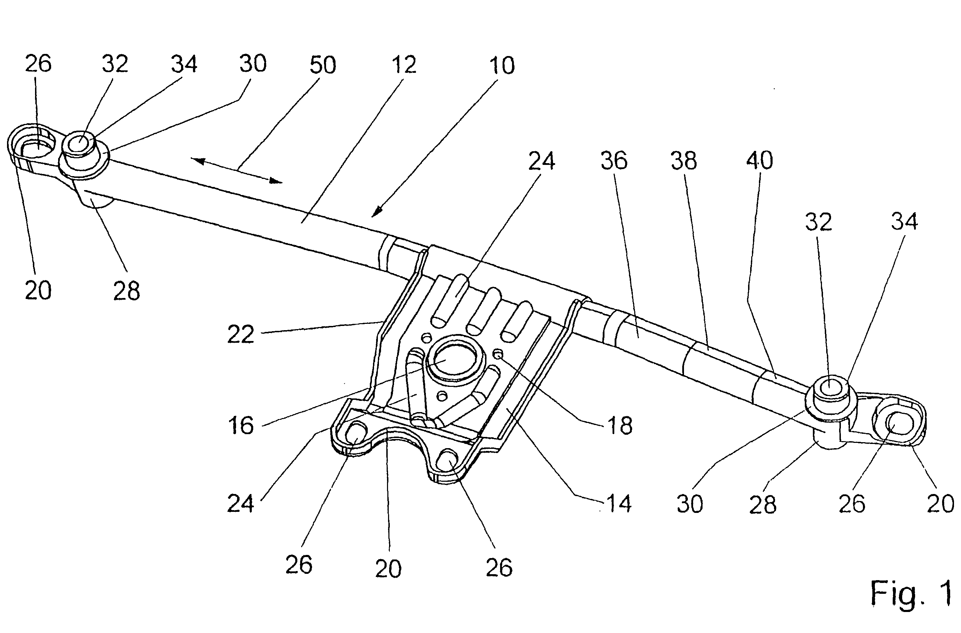

Eine Rohrplatine 10 umfaßt ein Platinenrohr 12, an dessen Enden Lagergehäuse 28 für Wischerlager vorgesehen sind, und eine Motorplatine 14. Diese besitzt eine Bohrung 16 zur Aufnahme eines nicht näher dargestellten Motors mit einem Getriebe, das durch Schrauben an der Motorplatine 14 befestigt wird. Hierzu dienen Schraubenlöcher 18, die um die Bohrung 16 verteilt angeordnet sind. Die Motorplatine 14 weist am Rand eine Versteifungsrippe 22 und im Bereich der Bohrung 16 und der Schraubenlöcher 18 Sicken 24 auf. Sie stützt sich über einen als Befestigungspunkt 20 ausgebildeten, gekröpften Bereich an einer nicht dargestellten Fahrzeugkarosserie ab. Zur Befestigung dienen Schrauben, die durch Langlöcher 26 der Motorplatine 14 gesteckt werden. Weitere Befestigungspunkte 20 mit Langlöchern 26 sind an den Lagergehäusen 28 angespritzt. Diese können unmittelbar Lagerflächen für die Wischerlager besitzen oder, wie in Fig. 1 dargestellt, eingespritzte Lagerbuchsen 34 mit Lagerbohrungen 32.

Mit 36, 38, 40 sind beispielhaft Bereiche des Platinenrohrs 12 gekennzeichnet, die sich im Querschnitt voneinander unterscheiden können, wobei die Querschnittkonturen und Materialstärken kontinuierlich ineinander übergehen können. Als Querschnittkonturen kommen kreisförmige, ovale, polygone oder sonstige in Frage.

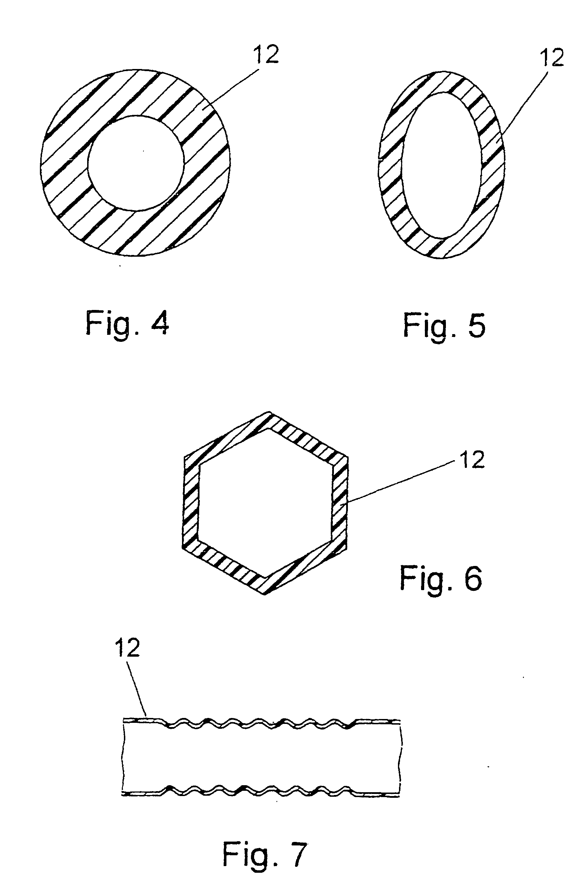

Die Fig. 4 bis 6 zeigen beispielhaft einige Ausführungsformen. Es ist auch möglich, das Platinenrohr 12 in einem oder mehreren Bereichen in Längsrichtung 50 gewellt auszuführen, wie Fig. 7 zeigt.

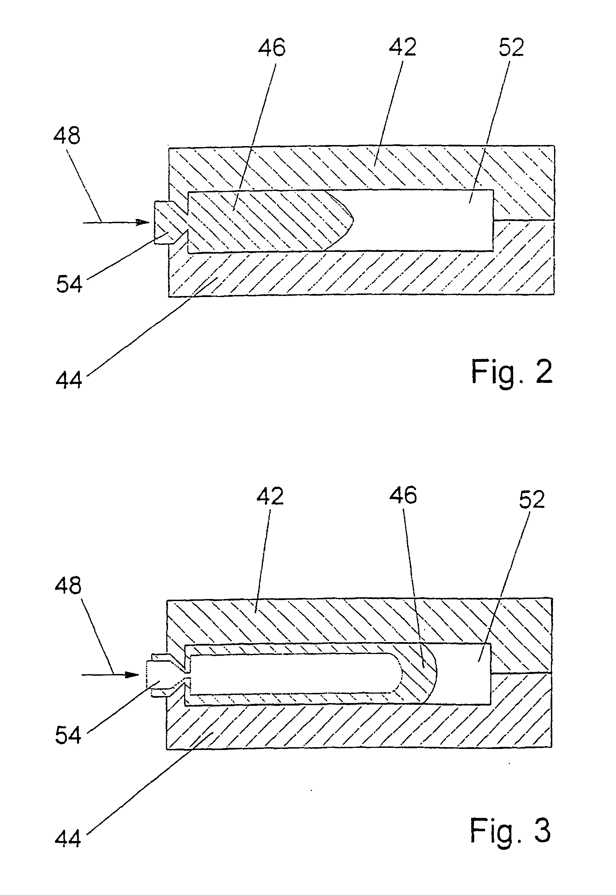

Das Platinenrohr 12 wird mit einem Gasinnendruckverfahren in einer mehrteiligen Werkzeugform 42, 44 hergestellt. Fig. 2 und 3 zeigen eine schematische Darstellung soweit, wie es für das Verständnis des Verfahrens erforderlich ist. Die obere Werkzeugform 42 und die untere Werkzeugform 44 werden durch geeignete, nicht näher dargestellte Mittel zusammengehalten, z.B. durch eine Presse. Sie bilden einen Hohlraum 52, der der äußeren Kontur der Rohrplatine 10 entspricht. Durch einen Anguß 54 wird Kunststoffschmelze 46 in den Hohlraum 52 eingebracht und Druckgas, in der Regel Stickstoff, durch eine Druckgaszufuhr 48 zentral in die Kunststoffschmelze 46 eingeleitet.

Das Druckgas legt die Kunststoffschmelze 46 an die Wand des Hohlraums 52 an und schiebt die Kunststoffschmelze 46 weiter in den Hohlraum 52 hinein. Auf das Gasinnendruckverfahren abgestimmt werden über weitere, nicht dargestellte Angüsse im Bereich der Motorplatine 14 und der Lagergehäuse 28 diese Teile im Spritzgußverfahren angeformt. Dabei werden der Druck und die Temperatur der Kunststoffschmelze 46 sowie die Spritzzeit so aufeinander abgestimmt, daß sich das Platinenrohr 12 mit den angespritzten Teilen 14, 20 und 28 nahtlos verbindet. Nach dem Abkühlen der Kunststoffschmelze 46 kann die fertige Rohrplatine 10 entformt und weitgehend ohne Nachbehandlung verwendet werden. Um die Formsteifigkeit zu erhöhen und das Schwingungsverhalten zu verbessern, ist es vorteilhaft, die Hohlräume des Platinenrohrs 12 mit einem Kunststoff auszuschäumen.

### Bezugszeichen

- 10: Rohrplatine
- 12: Platinenrohr
- 14: Motorplatine
- 16: Bohrung
- 18: Schraubenloch
- 20: Befestigungspunkt
- 22: Vertsteifungsrippe
- 24: Sicke
- 26: Langloch
- 28: Lagergehäuse
- 30: Anschlagfläche
- 32: Lagerbohrung
- 34: Lagerbuchse
- 36: Bereich
- 38: Bereich
- 40: Bereich
- 42: obere Werkzeugform
- 44: untere Werkzeugform
- 46: Kunststoffschmelze
- 48: Druckgaszufuhr
- 50: Längsrichtung
- 52: Hohlraum
- 54: Anguß

## Patentansprüche

1. Verfahren zur Herstellung einer einstückig aus Kunststoff hergestellten Rohrplatine (10) für eine Scheibenwischeranlage, **dadurch gekennzeichnet, dass** ein Platinenrohr (12) in einer Werkzeugform (42, 44) nach dem Gasinnendruckverfahren ausgeformt und Lagergehäuse (28), eine Motorplatine (14) und Befestigungspunkte (20) in der gleichen Werkzeugform (42, 44) in einem Spritzgussverfahren hergestellt werden.

2. Verfahren nach Anspruch 1, **dadurch gekennzeichnet, dass** das Platinenrohr (12) mit einem Kunststoff ausgeschäumt wird.

3. Rohrplatine (10), hergestellt nach einem der vorhergehenden Verfahren, **dadurch gekennzeichnet, dass** die Motorplatine (14) am Platinenrohr (12) befestigt ist, an dessen Enden die Lagergehäuse (28) für Wischerlager angeordnet sind, und das Platinenrohr (12), die Motorplatine (14), und die Lagergehäuse (28) einstückig aus Kunststoff hergestellt sind.

4. Rohrplatine (10) nach Anspruch 3, **dadurch gekennzeichnet, dass** in die Lagergehäuse (28) Lagebuchsen (34) eingespritzt sind.

5. Rohrplatine (10) nach Anspruch 3, **dadurch gekennzeichnet, dass** die Lagergehäuse (28) Lagerflächen für die Wischerlager aufweisen.

6. Rohrplatine (10) nach einem der Ansprüche 3 bis 5, **dadurch gekennzeichnet, dass** das Platinenrohr (12) in Längsrichtung Bereiche (36, 38, 40) mit unterschiedlichen Rohrquerschnitten aufweist.

7. Rohrplatine (10) nach einem der Ansprüche 3 bis 6, **dadurch gekennzeichnet, dass** das Platinenrohr (12) in Längsrichtung teilweise gewellt ist.

8. Rohrplatine (10) nach einem der Ansprüche 3 bis 7, **dadurch gekennzeichnet, dass** an den Lagergehäusen (28), dem Platinenrohr (12) und/oder der Motorplatine (14) die Befestigungspunkte (20) einstückig angeformt sind.

## Claims

1. Process for manufacturing a tubular carrier (10), produced from plastic, for a wiper system, **characterized in that** a carrier tube (12) is formed in a tool mould (42, 44) by the gas internal-pressure process, and bearing housings (28), a motor carrier (14) and fastening points (20) are manufactured in the same tool mould (42, 44) in an injection-moulding process.

2. Process according to Claim 1, **characterized in that** the carrier tube (12) is foam-filled with a plastic.

3. Tubular carrier (10) manufactured according to one of the preceding processes, **characterized in that** the motor carrier (14) is fastened to the carrier tube (12), at the ends of which the bearing housings (28) for wiper bearings are arranged, and the carrier tube (12), the motor carrier (14) and the bearing housings (28) are manufactured as a single piece from plastic.

4. Tubular carrier (10) according to Claim 3, **characterized in that** bearing bushings (34) are injected into the bearing housings (28).

5. Tubular carrier (10) according to Claim 3, **characterized in that** the bearing housings (28) have bearing surfaces for the wiper bearings.

6. Tubular carrier (10) according to one of Claims 3 to 5, **characterized in that** the carrier tube (12) has, in the longitudinal direction, regions (36, 38, 40) having different tube cross sections.

7. Tubular carrier (10) according to one of Claims 3 to 6, **characterized in that** the carrier tube (12) is partially corrugated in the longitudinal direction.

8. Tubular carrier (10) according to one of Claims 3 to 7, **characterized in that** the fastening points (20) are integrally formed on the bearing housings (28), the carrier tube (12) and/or the motor carrier (14).

## Revendications

1. Procédé pour fabriquer une platine tubulaire (10), fabriquée en une seule pièce en matière synthétique, pour une installation d'essuie-glace,
**caractérisé en ce qu'**
un tube de platine (12) est façonné dans un moule à outil (42, 44) d'après le procédé à pression interne de gaz, et
des logements de palier (28), une platine de moteur (14) et des points de fixation (20) sont fabriqués dans le même moule à outil (42, 44) en une opération de moulage par injection.

2. Procédé selon la revendication 1,
**caractérisé en ce que**
le tube de platine (12) est expansé à l'aide d'une matière synthétique.

3. Platine tubulaire (10) fabriquée d'après l'un des procédés précédents.
**caractérisée en ce que**
la platine de moteur (14) est fixée au tube de platine (12) aux extrémités duquel sont placés les logements de palier (28) pour des paliers d'essuie-glace, et le tube de platine (12), la platine de moteur (14) et les logements de palier (28) sont fabriqués d'une seule pièce en matière synthétique.

4. Platine tubulaire (10) selon la revendication 3,
**caractérisée en ce que**
des coussinets (34) sont injectés dans les logements de palier (28).

5. Platine tubulaire (10) selon la revendication 3,
**caractérisée en ce que**
les logements de palier (28) présentent des surfaces d'appui pour les paliers d'essuie-glace.

6. Platine tubulaire (10) selon l'une des revendications 3 à 5,
**caractérisée en ce qu'**
en direction longitudinale, le tube de platine (12) présente des zones (36, 38, 40) dont les sections transversales de tube sont différentes.

7. Platine tubulaire (10) selon l'une des revendications 3 à 6,
**caractérisée en ce que**
le tube de platine (12) est en partie ondulé en direction longitudinale.

8. Platine tubulaire (10) selon l'une des revendications 3 à 7,
**caractérisée en ce que**
les points de fixation (20) sont façonnés en une seule pièce sur les logements de palier (28), sur le tube de platine (12) et/ou sur la platine de moteur (14).
